# FASCICULE DE BREVET EUROPEEN

(11) **EP 3 622 009 B1**
(45) Date de publication et mention de la délivrance du brevet: **30.08.2023**
(21) Numéro de dépôt: 18734862.8
(22) Date de dépôt: 04.05.2018
(51) Int. Cl.: C08G 69/36, C08G 69/40

(54) **COMPOSITION À BASE DE PEBA ET SON UTILISATION POUR LA FABRICATION D'UN OBJET TRANSPARENT RÉSISTANT À LA FATIGUE**
ZUSAMMENSETZUNG AUF PEBA-BASIS UND VERWENDUNG DAVON ZUR HERSTELLUNG EINES ERMÜDUNGSBESTÄNDIGEN TRANSPARENTEN OBJEKTS
PEBA-BASED COMPOSITION AND USE THEREOF FOR PRODUCING A FATIGUE-RESISTANT TRANSPARENT OBJECT

(30) Priorité: 11.05.2017 FR 1754154
(43) Date de publication de la demande: 18.03.2020
(73) Titulaire: Arkema France, 92700 Colombes (FR)
(72) Inventeur: TURAN-ALTUNTAS, Inci, 27100 Val De Reuil (FR); PINEAU, Quentin, 27000 Evreux (FR); BLONDEL, Philippe, 27300 Bernay (FR); SABARD, Mathieu, 27470 Serquigny (FR)
(74) Mandataire: Arkema Patent
(86) Numéro de dépôt international: PCT/FR2018/051130
(87) Numéro de publication internationale: WO 2018/206889

(56) Documents cités:
- EP-A1- 2 036 939
- WO-A1-2004/037898

## Description

L'invention concerne l'utilisation de nouvelles compositions de polymères thermoplastiques élastomères (TPE) transparentes, facilement injectables, et permettant la fabrication d'objets qui combinent d'excellentes propriétés de transparence et de résistance à la fatigue (Rossflex) et au choc (Choc Charpy). L'invention a plus particulièrement pour objet la fabrication d'objets transparents, adaptés notamment pour les marchés du sport, de l'optique et de l'électronique.

Au sens de l'invention, on entend par « composition transparente », une composition de transmittance au moins égale à 80% selon la norme ISO 13468, et de Haze inférieur à 18%, de préférence inférieur à 15%, selon la norme ASTM D1003 - 97, ces 2 propriétés étant mesurées à 560 nm sur plaque de 2 mm d'épaisseur.

Parmi les TPE, on peut citer ceux à base de polyamide, et notamment les « copolymères à blocs polyéther et blocs polyamide » qui sont ci-après abrégés « PEBA ». Deux voies principales ont été explorées pour améliorer la transparence de ces TPE :
La première voie est la copolymérisation du polyamide permettant de diminuer la cristallinité d'un TPE à base de polyamide et donc d'améliorer sa transparence.

L'inconvénient est la mauvaise injectabilité des produits à base de copolyamides ainsi obtenus.

La deuxième voie est l'utilisation de diamines cycloaliphatiques qui désorganisent et cassent la cristallinité du TPE à base de polyamide. Ceci se traduit par des produits amorphes ayant d'excellentes propriétés optiques mais des propriétés mécaniques insuffisantes et une injectabilité difficile, voire impossible.

Le document de brevet WO04037898 décrit l'utilisation de blocs PA constitués d'un monomère majoritaire semi-aliphatique linéaire et d'une quantité suffisante d'au moins un comonomère afin de diminuer la cristallinité. On peut notamment citer deux exemples de PEBA de ce type :
- le PA6/12 - PTMG où le bloc PA est de 1300 g/mol et le bloc PTMG de 650 g/mol ;
- le PA12/IPD.10/PTMG où le bloc PA est de 1780 g/mol et le PTMG de 650 g/mol.
L'injection de tels produits pose problème.

Le document de brevet WO08/006987 décrit la synthèse de copolymères dont les motifs amides sont constitués majoritairement d'une association équimolaire d'au moins une diamine et d'au moins un diacide carboxylique, la ou les diamines étant majoritairement cycloaliphatiques et le ou les diacides carboxyliques étant majoritairement aliphatiques linéaires, les motifs amides pouvant éventuellement comprendre, mais de façon minoritaire, au moins un autre comonomère de polyamide, les proportions respectives de monomères des motifs éthers et amides étant choisies de telle sorte que : le copolymère est amorphe ou présente une cristallinité telle que l'enthalpie de fusion lors de la deuxième chauffe d'une DSC ISO 11357-3:2013 soit au plus égale à 30 J/g, et une Tg au moins égale à 75°C. A titre d'exemple de ce copolymère, on peut notamment citer le PEBA suivant : PAB.10/B.12-PTMG dans lequel le bloc PA est de 5000 g/mol et le bloc PTMG est de 650 g/mol, qui présente de très bonnes propriétés optiques comparables à un PAB.12 pur, mais des propriétés mécaniques insuffisantes, notamment de tenue à la fatigue.

Le document de brevet US2014134371 décrit des polyamides élastomères transparents amorphes, dans lesquels le segment PA contient de 10 à 100% molaire de BMACM ou PACM sur la quantité totale de diamine(s) dans le bloc PA. Dans ce document, l'élastomère comporte une phase amorphe dérivée du segment polyéther, montrant une Tg mesurée par DSC égale au maximum à 20°C. Les formulations décrites dans le document précité ont des propriétés de résistance à la fatigue (Rossflex) insuffisante. Parmi les formulations décrites, on peut citer le produit PA B.12-Elastamine RP 409 dans lequel le bloc PA est de 1000 g/mol, la température de transition vitreuse (Tg) de la phase PA est de 80 °C, et l'enthalpie de fusion est proche de 10 J/g. EP 2036 939 décrit un copolymère à blocs à base de polyéther et de polyamide. Le polymère doit posséder des propriétés physiques intéressantes (résistance à la fatigue) et une bonne transparence.

On recherche aujourd'hui une alternative aux PEBAs précités par des matériaux transparents, résistants à la fatigue et au choc, qui ne se déforment pas après injection, présentent des propriétés mécaniques et notamment de résistance à la fatigue élastique améliorées, et faciles à mettre en oeuvre avec les procédés ou dispositifs de mise en forme des polymères existants.

Plus précisément, la présente invention a pour but de fournir de nouvelles compositions polymères injectables facilement et qui évitent les problèmes de déformation à chaud ou recuit, notamment après injection ; pour la fabrication d'un objet transparent, résistant au choc et à la fatigue élastique. En particulier la composition de la présente invention vise l'obtention par injection d'un objet :
- aux propriétés optiques telles qu'il présente :
   - une « transparence » telle que la transmittance du matériau est supérieure à 80%, de préférence au moins égale à 85% à 560 nm sur plaque de 2 mm d'épaisseur (selon la norme ISO 13468),
   - un « Haze » tel que sa valeur ne dépasse pas 17, de préférence ne dépasse pas 14, mesuré selon selon la norme ASTM D1003 - 97.
- aux propriétés mécaniques telles qu'il présente :
   - une « résistance au choc » Charpy entaillé (« non casse » à 23°C) selon la norme ISO 179-1:2010 méthode 1eA,
   - une « résistance à la fatigue élastique » ou « Fatigue élastique » ou « Rossflex » telle que le matériau est capable d'être plié au moins 100 000 fois sans casse, donc avec retour élastique, au test "Ross-Flex".
Le test de fatigue dit "Ross Flex" est réalisé conformément à la norme ASTM D1052. On réalise des pièces de 2 mm d'épaisseur. Ces pièces sont percées d'un trou de 2,5 mm de diamètre puis conditionnées pendant 15 jours à 23 °C sous 50% d'humidité relative. Par ce test dit "Ross Flex", on détermine le nombre de fois au bout duquel la pièce, pliée à la hauteur du trou à 60°C et à une température de -10 °C, casse. On considère que la pièce remplit les conditions de ce test lorsque le nombre de cycles est supérieur ou égal à 100 000.

La présente invention a également pour but de fournir un procédé de fabrication de tels TPE qui soit simple, facile à mettre en oeuvre, rapide (qui présente le moins d'étapes possibles), et qui évite les problèmes de déformation ou recuit, notamment après injection.

On a maintenant trouvé un moyen d'obtenir un TPE combinant toutes ces propriétés par l'utilisation d'une gamme particulière de copolymères à blocs polyamide et blocs polyéther selon l'invention.

### Description détaillée de l'invention :

Dans la présente description, on précise que :
- les bornes sont exclues lorsqu'on écrit « comprise entre » deux bornes, et
- les bornes sont incluses lorsqu'on écrit « la gamme de X à Z » ou « représentent X à Y% ».

La présente invention a donc pour objet un copolymère (PEBA) à bloc rigide polyamide (PA) et bloc souple (PE) polyéther ou polyester, dans lequel ledit bloc polyamide est semi-cristallin et constitué d'un copolyamide de type W/Y.Z, dans lequel :
(i) W est un lactame ou un acide alpha-oméga aminocarboxylique;
(ii) Y est une diamine cycloaliphatique ;
(iii) Z est un diacide carboxylique aliphatique et/ou aromatique ;
et le ratio molaire W/Y.Z est compris entre 14/1 et 20/1. Au sens de l'invention, l'expression « copolymère à bloc(s) PE et bloc(s) PA » couvre notamment les PEBA comprenant un ou plusieurs blocs PE et un ou plusieurs blocs PA.

De préférence, le ratio molaire W/Y.Z dudit copolymère est compris dans la gamme de 15/1 à 20/1, de préférence de 17/1 à 20/1.

Avantageusement, le pourcentage en poids des différents composant est tel que :
(i) le pourcentage du monomère W est compris dans la gamme de 75 et 98 % en poids, de préférence de 80 à 90% ;
(ii) le pourcentage des monomères Y.Z est compris dans la gamme de 2 et 25 %, de préférence de 10 à 20 % ;
formant un total de 100% du bloc polyamide.

Avantageusement, le pourcentage de blocs polyamides dans le copolymère est compris dans la gamme de 60 à 97 %, de préférence de 65 à 95 % et le pourcentage de blocs polyéthers dans le copolymère est compris dans la gamme de 3 à 40 %, de préférence de 5 à 35 %.

Cette composition particulière des blocs PA (teneur et chimie) du PEBA contribue notamment à l'obtention d'une transparence conforme (transmittance au moins égale à 80%) aux exigences de l'invention.

Selon un mode de réalisation préféré, le copolymère selon l'invention est caractérisé en ce que le W est choisi parmi : le caprolactame, l'oenantholactame, le lauryllactame, l'acide aminocaproïque, l'acide amino-7-heptanoïque, l'acide amino-11-undécanoïque et l'acide amino-12-dodécanoïque.

Le terme « monomère » dans la présente description des polyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine.diacide (en quantité équimolaire), qui correspond au monomère. Ceci s'explique par le fait qu'individuellement, le diacide ou la diamine n'est qu'une unité structurale, qui ne suffit pas à elle seule à polymériser.

« Y.Z » forme une association équimolaire d'au moins une diamine cycloaliphatique et d'au moins un diacide carboxylique aliphatique, de préférence linéaire, ayant de 12 à 36 atomes de carbone, de préférence de 12 à 18 atomes de carbone. Le cas à 36 atomes de carbone inclut notamment l'utilisation de dimères d'acides gras, tels que ceux de la marque Pripol^{®}, par exemple le Pripol^{®} 1009. Le diacide carboxylique Z peut aussi être choisi parmi les diacides aromatiques, en particulier l'acide isophtalique (I), l'acide téréphtalique (T) et leurs mélanges.

De manière avantageuse, la diamine cycloaliphatique Y est choisie parmi : la bis(3,5-dialkyl-4-aminocyclohexyl)méthane, la bis(4-aminocyclohexyl)-méthane (BACM), la bis(3,5-dialkyl-4-aminocyclohexyl)ethane, la bis(3,5-dialkyl-4-aminocyclohexyl)-propane, le 2,2-bis(3-méthyl-4-aminocyclohexyl)propane (BMACP), la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM), l'isopropylidenedi(cyclohexylamine) (PACP), l'isophoronediamine (IPD), la 2,6-bis(aminométhyl)norbornane (BAMN), la 1,3-cyclohexanebis(methylamine) (1,3-BAC).

Avantageusement, la bis-(3-méthyl-4-aminocyclohexyl)-méthane est utilisée comme diamine Y pour l'obtention des blocs PA.

Avantageusement, le diacide carboxylique aliphatique et/ou aromatique est choisi parmi les diacides carboxyliques aliphatiques et/ou aromatique ayant de 6 à 36 atomes de carbone, de préférence de 9 à 18 atomes de carbone, en particulier le pripol, l'acide 1,10-décanedicarboxylique, l'acide 1,12-dodécanedicarboxylique, l'acide 1,14-tétradécanedicarboxylique et l'acide 1,18-octadécanedicarboxylique.

Selon un mode de réalisation préféré de l'invention, ledit copolymère est caractérisé en ce que la masse moléculaire moyenne en nombre des blocs PA est comprise dans la gamme de 500 à 18000 g/mole, de préférence dans la gamme de 1000 à 15000 g/mole et la masse moléculaire moyenne en nombre des blocs PE est comprise dans la gamme de 500 à 2000 g/mole, de préférence dans la gamme de 650 à 1000 g/mole.

De préférence, les blocs PE du copolymère selon l'invention sont issus d'au moins un polyalkylène éther polyol, notamment un polyalkylène éther diol, un polyoxyalkylène à bouts de chaînes NH2, et leurs mélanges. Avantageusement, le polyalkylène éther diol est choisi parmi le polyéthylène glycol (PEG), le polypropylène glycol (PPG), le polytriméthylène glycol (PO3G), le polytétraméthylène glycol (PTMG) et leurs mélanges. Les blocs PE peuvent comprendre des séquences polyoxyalkylène à bouts de chaînes NH2, de telles séquences pouvant être obtenues par cyanoacétylation de séquences polyoxyalkylène alpha-oméga dihydroxylés aliphatiques appelées polyétherdiols. Plus particulièrement, on pourra utiliser les produits de la marque Jeffamine^{®} (Par exemple Jeffamine^{®} D400, D2000, ED 2003, XTJ 542, produits commerciaux de la société Huntsman). Ledit au moins un bloc PE comprend de préférence au moins un polyéther choisi parmi les polyalkylènes éthers polyols, tels que le PEG, le PPG, le PO3G, le PTMG, les polyéthers contenant des séquences polyoxyalkylène à bouts de chaîne NH2, leurs copolymères (copolyéthers) statistiques et/ou à blocs, et leurs mélanges.

De préférence, les blocs polyester (ci-après abrégé PES) au sens de l'invention sont des polyesters habituellement fabriqués par polycondensation entre un acide dicarboxylique et un diol. Les acides carboxyliques appropriés comprennent ceux mentionnés ci-dessus utilisés pour former les blocs polyamide à l'exception des acides aromatiques, comme l'acide téréphtaliques et isophtaliques. Les diols appropriés comprennent les diols aliphatiques linéaires tels que l'éthylène glycol, le 1,3-propylène glycol, le 1,4-butylène glycol, le 1,6-hexylène glycol, les diols branchés tel que le néopentylglycol, le 3-méthylpentane glycol, le 1,2-propylène glycol, et les diols cycliques tels que le 1,4-bis(hydroxyméthyl)cyclohexane et le 1,4-cyclohexane-diméthanol.

On entend également par polyesters, le poly(caprolactone) et les PES à base de dimères d'acide gras, en particulier les produits de la gamme PRIPLAST^{®} de la société Croda ou Uniqema.

On peut également envisager un bloc PES de type «copolyester» alterné, statistique ou à blocs, contenant un enchaînement d'au moins deux types de PES cités ci-dessus.

Avantageusement, le copolymère selon l'invention présente :
- une transparence telle que la transmittance à 560 nm sur plaque de 2 mm d'épaisseur est d'au moins 80 %;
- une température de fusion comprise dans la gamme de 130 à 210°C ; et
- une cristallinité telle que l'enthalpie de fusion lors de la deuxième chauffe (delta Hm(2)) est comprise dans la gamme de 30 à 60 J/g, de préférence de 35 à 60 J/g, la masse étant rapportée à la quantité de motifs amides contenus ou de polyamide contenu, cette fusion correspondant à celle des motifs amides ;
la température de fusion et l'enthalpie de fusion étant mesurées selon la norme DSC ISO 11357-3:2013.

La présente invention a également pour objet un procédé de préparation d'un copolymère selon l'invention, tel que défini plus haut, caractérisé par les étapes suivantes :
- dans une première étape, on prépare des blocs polyamide PA par polycondensation
   - du lactame ou acide alpha-oméga aminocarboxylique W ;
   - de la diamine cycloaliphatique Y et du diacide carboxylique aliphatique et/ou aromatique Z ;
   - en présence optionnelle d'un limiteur de chaîne choisi parmi les diacides carboxyliques ; puis
- dans une seconde étape, on fait réagir les blocs polyamide PA W/Y.Z obtenus avec des blocs polyéther PE, en présence d'un catalyseur.

Selon un mode de réalisation alternatif, le procédé de préparation d'un copolymère selon l'invention, est caractérisé par la polycondensation en une étape :
- du lactame ou acide alpha-oméga aminocarboxylique W ;
- de la diamine cycloaliphatique Y et du diacide carboxylique aliphatique et/ou aromatique Z ;
- en présence optionnelle d'un limiteur de chaîne choisi parmi les diacides carboxyliques ;
- en présence des blocs polyéthers PE ;
- en présence d'un catalyseur pour la réaction entre les blocs PE et les blocs PA.

La présente invention a également pour objet une composition comprenant le copolymère selon l'invention et au moins un additif L'additif est choisi notamment parmi des agents colorants, notamment les pigments, les colorants, les pigments à effet, tels que les pigments diffractants, les pigments interférentiels, tels que les nacres, les pigments réfléchissants et leurs mélanges; des agents anti-UV, des agents antivieillissement, des agents antioxydant, des agents de fluidisation, des agents anti-abrasion, des agents démoulant, des stabilisants, des plastifiants, des modifiants chocs, des agents tensioactifs, des azurants, des charges, les fibres, des cires et leurs mélanges, et/ou tout autre additif bien connu dans le domaine des polymères.
Parmi les charges, on peut notamment citer la silice, le noir de carbone, les nanotubes de carbone, le graphite expansé, l'oxyde de titane ou encore les billes de verre.

En particulier, la présente invention a pour objet une composition polymérique thermoplastique transparente à base de polyamide, ladite composition comprenant de 80 à 99,9% en poids de copolymère conforme à l'invention et de 0,01 à 20% d'au moins un additif choisi parmi : les stabilisants thermiques, les stabilisants aux UV, les colorants, les agents de nucléation, les plastifiants, les agents améliorant la résistance aux chocs, ledit ou lesdits additifs ayant de préférence un indice de réfraction proche de celui dudit copolymère. De préférence, l'additif est présent dans la composition, en quantité en poids de 0,01 à 10%, de préférence de 0,01 à 5%, sur le poids total de la composition.
Selon un mode de réalisation, la composition de l'invention est fabriquée par compoundage ou bien par mélange à sec (« dry blend ») de ses différents composants. Le mélange à sec est préféré car il comprend moins d'étapes et entraîne généralement moins de riques de pollution (points noirs, gels) de la composition que par compoundage.

Ladite composition peut être utilisée selon l'invention pour fabriquer des granulés ou des poudres, qui peuvent être à leur tour utilisés dans les procédés de mise en forme classiques des polymères pour la fabrication de filaments, de tubes, de films, de plaques et/ou d'objets injectés ou moulés transparents et résistants à la fatigue (test Rossflex).
La présente invention a notamment pour objet un procédé de fabrication d'un objet transparent et résistant à la fatigue, ledit procédé comprenant:
- une étape de fourniture de copolymère conforme à celui défini précédemment ;
- une étape optionnelle de mélange dudit copolymère avec au moins un additif, de façon à fabriquer une composition telle que définie précédemment ;
- une étape de mise en oeuvre, notamment dans un moule ou une filière, du copolymère ou de la composition à une température T0 comprise dans la gamme de 180 à 270°C, de préférence de 200 à 250°C ;
- puis une étape de récupération de l'objet transparent.

Par « mise en oeuvre », on entend ici tout procédé de mise en forme des polymères, tels que moulage, injection, extrusion, coextrusion, compression à chaud, multi-injection, rotomoulage, frittage, laser sintering, etc, à partir de la composition ou du copolymère selon l'invention.

Pour le procédé de fabrication d'objets, notamment moulés, injectés ou extrudés selon l'invention, on privilégie les granulés. On utilise plus rarement les poudres de diamètre médian en volume (mesuré selon la norme ISO 9276 - parties 1 à 6) compris dans la gamme de 400 à 600 µm. Selon un mode particulier de mise en forme du procédé de l'invention, notamment par frittage tel que « laser sintering » ou encore par rotomoulage, les compositions selon l'invention se présentent de préférence sous la forme de poudre dont les particules ont un diamètre médian en volume inférieur à 400 µm, de préférence inférieur à 200 µm. Parmi les méthodes de fabrication de poudre, on peut citer le broyage cryogénique et la microganulation.

Un autre mode de réalisation possible du procédé de la présente invention peut comprendre en outre une étape préliminaire de compoundage de PEBA avec des colorants, et/ou tout autre additif, avant ladite étape de fabrication de granules ou poudre.

La présente invention a également pour objet un article façonné, tel que fibre, tissu, film, feuille, jonc, tube, pièce injectée, transparent, comprenant le copolymère selon l'invention, ou préparé par un procédé selon l'invention tel que défini plus haut.

Cet article consiste avantageusement en un article ou élément d'article de sport, tel qu'élément de chaussure de sport, ustensile de sport tel que patins à glace, fixations de skis, raquettes, battes de sports, planches, fers à cheval, palmes, balles de golf, en un article de loisirs, de bricolage, en un outil ou équipement de voirie soumis aux agressions climatiques et mécaniques, en un article de protection tel que visières de casques, lunettes, branches de lunettes, en un élément de voiture tel que protège-phares, rétroviseurs, petites pièces de voitures tout terrain, réservoirs, en particulier de scooters, cyclomoteurs, motos, pièce industrielle, électrique, électronique, informatique, tablette, téléphone, ordinateur, accessoire de sécurité, enseigne, bandeau lumineux, panneau signalétique et publicitaire, présentoir, gravure, ameublement, agencement de magasin, décoration, balle de contact, prothèse dentaire, implant, article d'ophtalmologie, membrane pour hémodialyseur, fibres optique, objet d'art, sculpture, lentilles d'appareils photo, lentilles d'appareil photo jetable, support d'impression, notamment support d'impression directe avec encres UV, pour tableau photo, vitre, toit panoramique.

### Exemples

Les exemples ci-dessous illustrent la présente invention sans en limiter la portée. Dans les exemples, sauf indication contraire, tous les pourcentages et parties sont exprimés en poids.

**Tableau 1**

| Propriétés | Composition | | Exemples | | | | | | |
|---|---|---|---|---|---|---|---|---|---|
| | | | selon l'invention | | | comparatifs | | | |
| | | | Ex1 | Ex2 | Ex3 | Cp1 | Cp2 | Cp3 | Cp4 |
| | Mn du bloc PA | | 11 930 | 12 350 | 2000 | 5 000 | 19 000 | 2000 | 5 000 |
| | Mn du bloc PE | | 650 | 650 | 1000 | 650 | 1000 | 650 | 650 |
| | COPA / PA | | 17 moles de L 12 | 20 moles de A11 | 17 moles de L 12 | 27 moles de 11 | 10 moles de A11 | B.12 pur | 12 |
| | | | 1 mole de B.10 | 1 mole de B.10 | 1 mole de B.14 | 1 mole de B.10 | 1 mole de B.10 | | |
| Propriétés thermiques | DSC | Tf (°C) | Cristallin 165 | Cristallin 174 | Cristallin 154 | Cristallin 168 | Cristallin 165 | Amorphe | Cristallin 172 |
| | | Enthalpie (J/g) | 50 | 57 | 40 | 48 | 41 | | 33 |
| | | Tg (°C) | ras | ras | ras | ras | ras | 90 | ras |
| Propriétés optiques | Transparence | | 84% | 82% | 85% | 78% | 81% | 91% | < 35 % |
| | Haze | | 10 | 14 | 17 | 18 | 26 | 5 | nm |
| Injectabilité / déformation | injectabilité | | Ok | Ok | Ok | Ok | Ok | Nok | Ok |
| | Déformation à chaud (recuit) | | Non | Non | Non | Non | Non | Oui | Non |
| Propriétés mécaniques | Choc Charpy entaillé | 23°C | Non casse | Non casse | Non casse | nm | casse | Non casse | Non casse |
| | Rossflex | | > 100 000 | > 100 000 | > 150 000 | nm | 50 000 | 20 000 | 50 000 |

Les PEBAs utilisés sont à blocs PA (respectivement PA12/B.10, PA11/B.10, PA12B.14, PA11/B.10, PA11/B.10, PAB.12 etPA12) et à blocs PTMG. Si dans les exemples ci-dessous les blocs PTMG sont généralement utilisés comme blocs PE, l'invention ne se limite évidemment pas à ce mode de réalisation et on ne sortirait pas du cadre de l'invention en remplaçant les blocs PTMG par tout autre bloc PE tel que décrit précédemment.

La taille des blocs PA et PE (Masse moléculaire en nombre) des PEBA est respectivement indiquée en tête du tableau 1.

Toutes les propriétés du Tableau 1 sont mesurées respectivement selon les normes indiquées précédemment au début de la description.

Les plaques et éprouvettes sont obtenues par injection à partir de granulés de PEBA.

Dans le tableau 1 ci-dessus :
- « ras » (notamment pour la Tg) signifie qu'il n'y a pas de Tg, absence de Tg.
- « OK » (notamment pour l'injectabilité) signifie une injection facile, tandis que « NOK » indique ici une injection impossible.
- nm (notamment pour les propriétés mécaniques du Cp1 ou le Haze de Cp4) signifie que ces propriétés n'ont pas été mesurées lors de ces essais.

Le tableau 1 montre que seuls les PEBAs des exemples 1 à 3 (Ex1, Ex2, et Ex3) selon l'invention combinent à la fois :
- bonne injectabilité, absence de déformation après traitement thermique (recuit à 90°C, 10 minutes),
- haute transparence (transmittance d'au moins 80% à 560 nm sur plaque polie de 2 mm d'épaisseur, mesurée au moyen d'un spectrophotomètre Konica-Minolta 3610d, selon la norme ISO 13468),
- faible Haze (ne dépassant pas 17),
- résistance à la fatigue élastique (Rossflex supérieur à 100000), contrairement aux comparatifs 1 à 4 (Cp1 à Cp4).

## Revendications

1. Copolymère à bloc rigide polyamide et bloc souple polyéther ou polyester, dans lequel ledit bloc polyamide est semi-cristallin et constitué d'un copolyamide de type W/Y.Z, dans lequel :
(i) W est un lactame ou un acide alpha-oméga aminocarboxylique;
(ii) Y est une diamine cycloaliphatique ;
(iii) Z est un diacide carboxylique aliphatique et/ou aromatique ;
et le ratio molaire W/Y.Z est compris entre 14/1 et 20/1

2. Copolymère selon la revendication 1, **caractérisé en ce que** le ratio molaire W/Y.Z est compris dans la gamme de 15/1 à 20/1, de préférence de 17/1 à 20/1.

3. Copolymère selon la revendication 1 ou 2, **caractérisé en ce que** le pourcentage en poids des différents composant est tel que :
(i) le pourcentage du monomère W est compris dans la gamme de 75 et 98 % en poids, de préférence de 80 à 90% ;
(ii) le pourcentage des monomères Y.Z est compris dans la gamme de 2 et 25 %, de préférence de 10 à 20 % ;
formant un total de 100% du bloc polyamide.

4. Copolymère selon l'une quelconque des revendications 1 à 3, **caractérisé en ce que** le pourcentage de blocs polyamides dans le copolymère est compris dans la gamme de 60 à 97 %, de préférence de 65 à 95 % et le pourcentage de blocs polyéthers dans le copolymère est compris dans la gamme de 3 à 40 %, de préférence de 5 à 35 %.

5. Copolymère selon l'une quelconque des revendications 1 à 4, **caractérisé en ce que** le W est choisi parmi : le caprolactame, l'oenantholactame, le lauryllactame, l'acide aminocaproïque, l'acide amino-7-heptanoïque, l'acide amino-11-undécanoïque et l'acide amino-12-dodécanoïque.

6. Copolymère selon l'une quelconque des revendications 1 à 5, **caractérisé en ce que** la diamine cycloaliphatique Y est choisie parmi : la bis(3,5-dialkyl-4-aminocyclohexyl)méthane, la bis(4-aminocyclohexyl)-méthane (BACM), la bis(3,5-dialkyl-4-aminocyclohexyl)ethane, la bis(3,5-dialkyl-4-aminocyclohexyl)-propane, le 2,2-bis(3-méthyl-4-aminocyclohexyl)propane (BMACP), la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM), l'isopropylidenedi(cyclohexylamine) (PACP), l'isophoronediamine (IPD), la 2,6-bis(aminométhyl)norbornane (BAMN).

7. Copolymère selon l'une quelconque des revendications 1 à 6, **caractérisé en ce que** le diacide carboxylique aliphatique et/ou aromatique est choisi parmi les diacides carboxyliques aliphatiques et/ou aromatique ayant de 6 à 36 atomes de carbone, de préférence de 9 à 18 atomes de carbone, en particulier le pripol, l'acide 1,10-décanedicarboxylique, l'acide 1,12-dodécanedicarboxylique, l'acide 1,14-tétradécanedicarboxylique et l'acide 1,18-octadécanedicarboxylique.

8. Copolymère selon l'une quelconque des revendications 1 à 7, **caractérisé en ce que** :
- la masse moléculaire moyenne en nombre des blocs PA est comprise dans la gamme de 500 à 18000 g/mole, de préférence dans la gamme de 1000 à 15000 g/mole ; et
- la masse moléculaire moyenne en nombre des blocs PE est comprise dans la gamme de 500 à 2000 g/mole, de préférence dans la gamme de 650 à 1000 g/mole.

9. Copolymère selon l'une quelconque des revendications 1 à 8, **caractérisé en ce que** les blocs PE sont issus d'au moins un polyalkylène éther polyol, notamment un polyalkylène éther diol, un polyoxyalkylène à bouts de chaînes NH2, et leurs mélanges.

10. Copolymère selon la revendication 9, **caractérisé par le fait que** le polyalkylène éther diol est choisi parmi le polyéthylène glycol (PEG), le polypropylène glycol (PPG), le polytriméthylène glycol (PO3G), le polytétraméthylène glycol (PTMG) et leurs mélanges.

11. Copolymère selon l'une quelconque des revendications 1 à 10, **caractérisé en ce qu'**il présente :
- une transparence telle que la transmittance à 560 nm sur plaque de 2 mm d'épaisseur est d'au moins 80 %;
- une température de fusion comprise dans la gamme de 130 à 210°C ; et
- une cristallinité telle que l'enthalpie de fusion (delta Hm(2)) lors de la deuxième chauffe est comprise dans la gamme de 30 à 60 J/g, de préférence de 35 à 60 J/g ;
la température de fusion et l'enthalpie de fusion étant mesurées selon la norme DSC ISO 11357-3:2013.

12. Procédé de préparation d'un copolymère tel que défini selon l'une quelconque des revendications 1 à 11, **caractérisé par** les étapes suivantes :
- dans une première étape, on prépare des blocs polyamide PA par polycondensation
- du lactame ou acide alpha-oméga aminocarboxylique W ;
- de la diamine cycloaliphatique Y et du diacide carboxylique aliphatique et/ou aromatique Z ;
- en présence optionnelle d'un limiteur de chaîne choisi parmi les diacides carboxyliques ; puis
- dans une seconde étape, on fait réagir les blocs polyamide PA W/Y.Z obtenus avec des blocs polyéther PE, en présence d'un catalyseur.

13. Procédé de préparation d'un copolymère tel que défini selon l'une quelconque des revendications 1 à 11, **caractérisé par** la polycondensation en une étape :
- du lactame ou acide alpha-oméga aminocarboxylique W ;
- de la diamine cycloaliphatique Y et du diacide carboxylique aliphatique et/ou aromatique Z ;
- en présence optionnelle d'un limiteur de chaîne choisi parmi les diacides carboxyliques ;
- en présence des blocs polyéthers PE ;
- en présence d'un catalyseur pour la réaction entre les blocs PE et les blocs PA.

14. Article façonné, tel que fibre, tissu, film, feuille, jonc, tube, pièce injectée, transparent, comprenant un copolymère tel que défini à l'une quelconque des revendications 1 à 11.

15. Articlé façonné selon la revendication 14, **caractérisé par le fait qu'**il consiste en un article ou élément d'article de sport, tel qu'élément de chaussure de sport, ustensile de sport tel que patins à glace, fixations de skis, raquettes, battes de sports, planches, fers à cheval, palmes, balles de golf, en un article de loisirs, de bricolage, en un outil ou équipement de voirie soumis aux agressions climatiques et mécaniques, en un article de protection tel que visières de casques, lunettes, branches de lunettes ; en un élément de voiture tel que protège-phares, rétroviseurs, petites pièces de voitures tout terrain ; réservoirs, en particulier de scooters, cyclomoteurs, motos ; pièce industrielle, électrique, électronique, informatique, tablette, téléphone, ordinateur, accessoire de sécurité, enseigne, bandeau lumineux, panneau signalétique et publicitaire, présentoir, gravure, ameublement, agencement de magasin, décoration, balle de contact, prothèse dentaire, implant, article d'ophtalmologie, membrane pour hémodialyseur, fibres optique, objet d'art, sculpture, lentilles d'appareils photo, lentilles d'appareil photo jetable, support d'impression, notamment support d'impression directe avec encres UV, pour tableau photo, vitre, toit panoramique.

## Patentansprüche

1. Copolymer mit starrem Polyamidblock und flexiblem Polyether- oder Polyesterblock, bei dem der Polyamidblock semikristallin ist und aus einem Copolyamid vom Typ W/Y.Z besteht, bei dem:
(i) W ein Lactam oder eine Alpha-Omega-Aminocarbonsäure ist;
(ii) Y ein cycloaliphatisches Diamin ist;
(iii) Z eine aliphatische und/oder aromatische Dicarbonsäure ist;
und das Molverhältnis W/Y.Z zwischen 14/1 und 20/1 beträgt.

2. Copolymer nach Anspruch 1, **dadurch gekennzeichnet, dass** das Molverhältnis W/Y.Z im Bereich von 15/1 bis 20/1, bevorzugt von 17/1 bis 20/1 liegt.

3. Copolymer nach Anspruch 1 oder 2, **dadurch gekennzeichnet, dass** der gewichtsprozentuale Anteil der einzelnen Bestandteile derart ist, dass:
(i) der prozentuale Anteil des Monomers M im Bereich von 75 und 98 Gew.-%, bevorzugt von 80 bis 90 Gew.-% liegt;
(ii) der prozentuale Anteil der Monomere Y.Z im Bereich von 2 und 25 %, bevorzugt von 10 bis 20 % liegt,
eine Summe von 100 % des Polyamidblocks ergebend.

4. Copolymer nach einem der Ansprüche 1 bis 3, **dadurch gekennzeichnet, dass** der prozentuale Anteil von Polyamidblöcken in dem Copolymer im Bereich von 60 bis 97 %, bevorzugt von 65 bis 95 % liegt und der prozentuale Anteil von Polyetherblöcken in dem Copolymer im Bereich von 3 bis 40 %, bevorzugt von 5 bis 35 % liegt.

5. Copolymer nach einem der Ansprüche 1 bis 4, **dadurch gekennzeichnet, dass** W gewählt ist unter: Caprolactam, Oenantholactam, Laurinlactam, Aminocapronsäure, 7-Aminoheptansäure, 11-Amino-undecansäure und 12-Aminododecansäure.

6. Copolymer nach einem der Ansprüche 1 bis 5, **dadurch gekennzeichnet, dass** das cycloaliphatische Diamin Y gewählt ist unter: Bis(3,5-dialkyl-4-aminocyclohexyl)methan, Bis(4-aminocyclohexyl)-methan (BACM), Bis(3,5-dialkyl-4-aminocyclohexyl)ethan, Bis(3,5-dialkyl-4-aminocyclohexyl)-propan, 2,2-Bis(3-methyl-4-aminocyclohexyl)propan (BMACP), Bis(3,5-dialkyl-4-aminocyclohexyl)butan, Bis(3-methyl-4-aminocyclohexyl)-methan (BMACM oder MACM), p-Bis(aminocyclohexyl)-methan (PACM), Isopropylidendi(cyclohexylamin) (PACP), Isophorondiamin (IPD), 2,6-Bis(aminomethyl)norbornan (BAMN).

7. Copolymer nach einem der Ansprüche 1 bis 6, **dadurch gekennzeichnet, dass** die aliphatische oder aromatische Dicarbonsäure gewählt ist unter den aliphatischen und/oder aromatischen Dicarbonsäuren mit 6 bis 36 Kohlenstoffatomen, bevorzugt mit 9 bis 18 Kohlenstoffatomen, insbesondere Pripol, 1,10-Decandicarbonsäure, 1,12-Dodecandicarbonsäure, 1,14-Tetradecandicarbonsäure und 1,18-Octadecandicarbonsäure.

8. Copolymer nach einem der Ansprüche 1 bis 7, **dadurch gekennzeichnet, dass**:
- die zahlenmäßig mittlere Molekularmasse der PA-Blöcke im Bereich von 500 bis 18000 g/Mol, bevorzugt im Bereich von 1000 bis 15000 g/Mole liegt; und
- die zahlenmäßig mittlere Molekularmasse der PE-Blöcke im Bereich von 500 bis 2000 g/Mol, bevorzugt im Bereich von 650 bis 1000 g/Mol liegt.

9. Copolymer nach einem der Ansprüche 1 bis 8, **dadurch gekennzeichnet, dass** die PE-Blöcke aus mindestens einem Polyalkylenetherpolyol, insbesondere einem Polyalkylenetherdiol, einem Polyoxyalkylen mit NH2-Kettenenden und ihren Mischungen hervorgegangen sind.

10. Copolymer nach Anspruch 9, **dadurch gekennzeichnet, dass** das Polyalkylenetherdiol unter Polyethylenglycol (PEG), Polypropylenglycol (PPG), Polytrimethylenglycol (PO3G), Polytetramethylenglycol (PTMG) und ihren Mischungen gewählt ist.

11. Copolymer nach einem der Ansprüche 1 bis 10, **dadurch gekennzeichnet, dass** es aufweist:
- eine derartige Transparenz, dass der Transmissionsgrad bei 560 nm an einer Platte von 2 mm Dicke mindestens 80 % beträgt;
- eine Schmelztemperatur, die im Bereich von 130 bis 210 °C liegt; und
- eine derartige Kristallinität, dass die Schmelzenthalpie (Delta Hm(2)) bei der zweiten Erwärmung im Bereich von 30 bis 60 J/g, bevorzugt von 35 bis 60 J/g liegt;
wobei die Schmelztemperatur und die Schmelzenthalpie nach der DSC-Norm ISO 11357-3:2013 gemessen werden.

12. Verfahren zur Herstellung eines Copolymers nach einem der Ansprüche 1 bis 11, **gekennzeichnet durch** die folgenden Schritte:
- in einem ersten Schritt stellt man PA-Blöcke her durch Polykondensation
- des Lactams oder der Alpha-Omega-Aminocarbonsäure W;
- des cycloaliphatischen Diamins Y und der aliphatischen oder aromatischen Dicarbonsäure Z;
- in optionaler Gegenwart eines Kettenbegrenzers, der unter den Dicarbonsäuren gewählt ist; dann
- lässt man in einem zweiten Schritt die Polyamidblöcke PA W/Y.Z, die mit Polyetherblöcken PE erhalten werden, in Gegenwart eines Katalysators reagieren.

13. Verfahren zur Herstellung eines Copolymers nach einem der Ansprüche 1 bis 11, **gekennzeichnet durch** die Polykondensation in einem Schritt:
- des Lactams oder der Alpha-Omega-Aminocarbonsäure W;
- des cycloaliphatischen Diamins Y und der aliphatischen oder aromatischen Dicarbonsäure Z;
- in optionaler Gegenwart eines Kettenbegrenzers, der unter den Dicarbonsäuren gewählt ist;
- in Gegenwart der Polyetherblöcke PE;
- in Gegenwart eines Katalysators für die Reaktion zwischen den Blöcken PE und den Blöcken PA.

14. Formkörper wie Faser, Gewebe, Film, Folie, Stange, Rohr, Spritzgussteil, transparent, umfassend ein Copolymer nach einem der Ansprüche 1 bis 11.

15. Formkörper nach Anspruch 14, **dadurch gekennzeichnet, dass** er aus einem Artikel oder Element eines Sportartikels wie einem Sportschuhelement, einem Sportgerät wie Schlittschuhe, Skibindungen, Schneeschuhe, Schläger, Bretter, Hufeisen, Schwimmflossen, Golfbälle, aus einem Freizeit- oder Heimwerkerartikel, aus einem Werkzeug oder einer Straßenausrüstung, die klimatischen und mechanischen Angriffen ausgesetzt ist, aus einem Schutzartikel wie Helmvisiere, Brillen, Brillenbügel; aus einem Fahrzeugelement wie Scheinwerferschutz, Rückspiegel, Kleinteile für Geländefahrzeuge; Tanks, insbesondere von Motorrollern, Mopeds, Motorrädern; einem industriellen, elektrischen, elektronischen, informationstechnischen Teil, Tablet, Telefon, Computer, Sicherheitszubehör, Schild, Lichtband, Verkehrs- und Werbeschild, Aufsteller, Gravur, Möbel, Geschäftseinrichtung, Dekoration, Kontaktball, Zahnprothese, Implantat, Augenheilkundeartikel, Membran für Dialysegerät, Glasfasern, Kunstgegenstand, Skulptur, Linsen von Fotoapparaten, Linsen von Einwegfotoapparaten, Druckmedien, insbesondere Direktdruckmedien mit UV-Druckfarben, für Fototafel, Glasscheibe, Panoramadach besteht.

## Claims

1. Copolymer with a rigid polyamide block and a flexible polyether or polyester block, wherein said polyamide block is semicrystalline and consists of a copolyamide of W/Y.Z type, wherein:
(i) W is a lactam or an alpha, omega-aminocarboxylic acid;
(ii) Y is a cycloaliphatic diamine;
(iii) Z is an aliphatic and/or aromatic dicarboxylic acid;
and the W/Y.Z molar ratio is between 14/1 and 20/1.

2. Copolymer according to Claim 1, **characterized in that** the W/Y.Z molar ratio is within the range of from 15/1 to 20/1, preferably from 17/1 to 20/1.

3. Copolymer according to Claim 1 or 2, **characterized in that** the percentage by weight of the various components is such that:
(i) the percentage of the monomer W is within the range of 75% and 98% by weight, preferably from 80% to 90%;
(ii) the percentage of the Y.Z monomers is within the range of 2% and 25%, preferably from 10% to 20%;
forming a total of 100% of the polyamide block.

4. Copolymer according to any one of Claims 1 to 3, **characterized in that** the percentage of polyamide blocks in the copolymer is within the range of from 60% to 97%, preferably from 65% to 95% and the percentage of polyether blocks in the copolymer is within the range of from 3% to 40%, preferably from 5% to 35%.

5. Copolymer according to any one of Claims 1 to 4, **characterized in that** W is chosen from: caprolactam, oenantholactam, lauryllactam, aminocaproic acid, 7-aminoheptanoic acid, 11-aminoundecanoic acid and 12-aminododecanoic acid.

6. Copolymer according to any one of Claims 1 to 5, **characterized in that** the cycloaliphatic diamine Y is chosen from: bis(3,5-dialkyl-4-aminocyclohexyl)methane, bis(4-aminocyclohexyl)methane (BACM), bis(3,5-dialkyl-4-aminocyclohexyl)ethane, bis(3,5-dialkyl-4-aminocyclohexyl)propane, 2,2-bis(3-methyl-4-aminocyclohexyl)propane (BMACP), bis(3,5-dialkyl-4-aminocyclohexyl)butane, bis(3-methyl-4-aminocyclohexyl)methane (BMACM or MACM), p-bis(aminocyclohexyl)methane (PACM), isopropylidenedi(cyclohexylamine) (PACP), isophoronediamine (IPD), 2, 6-bis (aminomethyl) norbornane (BAMN) .

7. Copolymer according to any one of Claims 1 to 6, **characterized in that** the aliphatic and/or aromatic dicarboxylic acid is chosen from aliphatic and/or aromatic dicarboxylic acids having from 6 to 36 carbon atoms, preferably from 9 to 18 carbon atoms, in particular pripol, 1,10-decanedicarboxylic acid, 1,12-dodecanedicarboxylic acid, 1,14-tetradecanedicarboxylic acid and 1,18-octadecanedicarboxylic acid.

8. Copolymer according to any one of Claims 1 to 7, **characterized in that**:
- the number-average molecular mass of the PA blocks is within the range of from 500 to 18 000 g/mol, preferably within the range of from 1000 to 15 000 g/mol; and
- the number-average molecular mass of the PE blocks is within the range of from 500 to 2000 g/mol, preferably within the range of from 650 to 1000 g/mol.

9. Copolymer according to any one of Claims 1 to 8, **characterized in that** the PE blocks are derived from at least one polyalkylene ether polyol, in particular a polyalkylene ether diol, a polyoxyalkylene with NH₂ chain ends, and mixtures thereof.

10. Copolymer according to Claim 9, **characterized in that** the polyalkylene ether diol is chosen from polyethylene glycol (PEG), polypropylene glycol (PPG), polytrimethylene glycol (PO3G), polytetramethylene glycol (PTMG) and mixtures thereof.

11. Copolymer according to any one of Claims 1 to 10, **characterized in that** it has:
- a transparency such that the transmittance at 560 nm through a 2-mm thick sheet is at least 80%;
- a melting point within the range of from 130°C to 210°C;
and
- a crystallinity such that the enthalpy of fusion (delta Hm(2)) during the second heating is within the range of from 30 to 60 J/g, preferably from 35 to 60 J/g;
the melting point and the enthalpy of fusion being measured according to the ISO 11357-3:2013 DSC standard.

12. Process for preparing a copolymer as defined according to any one of Claims 1 to 11, **characterized by** the following steps:
- in a first step, the polyamide PA blocks are prepared by polycondensation
- of the lactam or an alpha,omega-aminocarboxylic acid W;
- of the cycloaliphatic diamine Y and of the aliphatic and/or aromatic dicarboxylic acid Z;
- in the optional presence of a chain stopper chosen from dicarboxylic acids; then
- in a second step, the polyamide PA blocks W/Y.Z obtained are reacted with polyether PE blocks, in the presence of a catalyst.

13. Process for preparing a copolymer as defined according to any one of Claims 1 to 11, **characterized by** the one-step polycondensation:
- of the lactam or an alpha,omega-aminocarboxylic acid W;
- of the cycloaliphatic diamine Y and of the aliphatic and/or aromatic dicarboxylic acid Z;
- in the optional presence of a chain stopper chosen from dicarboxylic acids;
- in the presence of the polyether PE blocks;
- in the presence of a catalyst for the reaction between the PE blocks and the PA blocks.

14. Shaped article such as a fibre, fabric, film, sheet, rod, tube or injection-moulded part, which is transparent, comprising a copolymer as defined according to any one of Claims 1 to 11.

15. Shaped article according to Claim 14, **characterized in that** it consists of an article of sports equipment or a component of an article of sports equipment, such as a component of a sports shoe, an item of sports gear, such as ice skates, ski bindings, rackets, sports bats, boards, horseshoes, fins or golf balls, a recreational or do-it-yourself article, or a highway tool or piece of equipment exposed to the weather and subject to mechanical attack, a protective article, such as helmet visors, glasses or side arms for glasses; a motor vehicle component, such as headlamp protectors, rearview mirrors, small components of all-terrain motor vehicles; tanks, in particular of scooters, mopeds or motorbikes; an industrial, electrical, electronic or computer part, tablet, telephone, computer, safety accessory, sign, cornice lighting, information and advertising panel, display case, engraving, furnishing, shopfitting, decoration, contact ball, dental prosthesis, implant, ophthalmology article, hemodialysis membrane, optical fibers, work of art, sculpture, camera lenses, disposable camera lenses, printing substrate, in particular substrate for direct printing with UV inks for photographic picture, glazing, sunroof.
